# EUROPÄISCHE PATENTANMELDUNG

(11) **EP 2 202 541 A1**
(43) Veröffentlichungstag der Anmeldung: **30.06.2010**
(21) Anmeldenummer: 08873172.4
(22) Anmeldetag: 06.11.2008
(51) Int. Cl.: G01V 3/02

(54) **BODENSTATION (VARIANTEN)**

(30) Priorität: 04.03.2008 RU 2008107911
(71) Anmelder: Zakrytoe Aktsionernoe Obshchestvo 'Emmet', Moscow 119330 (RU)
(72) Erfinder: TULUPOV, Andrej Vladimirovich, Moscow 117036 (RU); LISITSYN, Evgenij Dmitrievich, St.Petersburg 192212 (RU); PETROV, Alexandr Arkad'evich, St.Petersburg 197101 (RU); KYASPER, Vladimir Eduardovich, St.Petersburg 192283 (RU)
(74) Vertreter: Jeck, Anton
(86) Internationale Anmeldenummer: PCT/RU2008/000690
(87) Internationale Veröffentlichungsnummer: WO 2009/110818

(57) **Zusammenfassung**

Die Erfindung betrifft eine Bodenanlage auf der Grundlage eines Moduls zur Messung von elektromagnetischen Kenndaten der Meeresgrundgesteine mit einem Körper, einer Schwimmeinheit, einem Datenerfassungssystem einschließlich von Elektroden, einem Ballastauslöser und einem Ballast. Eine erhöhte Prognosegenauigkeit sowie ein bequemerer und zuverlässigerer Betrieb, insbesondere bei Anlage in einer Vorstartstellung mit kleineren Abmessungen mit optimierten Senk- und Hebearbeiten, wird **dadurch** erreicht, dass zwischen dem Modul zur Abmessung von elektromagnetischen Kenndaten der Meeresgrundgesteine und dem Ballast mindestens ein Modul angeordnet ist, welches für die Messung von anderen Eigenschaften und Kenndaten der Meeresgrundgesteine geeignet ist, dass dabei alle Erfassungs- und Versorgungssysteme in einem ersten Modul angeordnet und mit anderen Modulen über abgedichtete Steckverbinder verbunden sind, die im Körper dieses Moduls eingebaut sind und dass die Module selbst auf dem Ballast mittels der mit elektrochemischen Auslösern ausgerüsteten Kevlarschoten befestigt sind.

## Beschreibung

Die Erfindung betrifft eine Bodenanlage auf der Grundlage eines Moduls zur Messung von elektromagnetischen Kenndaten der Meeresgrundgesteine mit einem Körper, einer Schwimmeinheit, einem Datenerfassungssystem einschließlich von Elektroden, einem Ballastauslöser und einem Ballast.

Die Erfindung ist im Bereich der Erkundungsgeophysik und insbesondere der Anlagentechnik für geoelektrische Seeerkundung einsetzbar. Sie bezieht sich dabei insbesondere auf ein Verfahren einer induzierten Polarisation, einer Magnetotellurik bzw. einer seismischen Erkundung und damit zur Vorhersage eines Kohlenwasserstoffvorkommens und anderer Bodenschätze sowie zur Forschung der Zusammensetzung der Erdrinde.

Zurzeit werden Bodenanlagen mit unterschiedlichen Konstruktionen und Bestimmungszwecken für geophysikalische Seeuntersuchungen weit und breit angewendet. So sind z. B. seismometrische Bodenanlagen aus mehreren Druckschriften bekannt wie RU 24890; Selbstaufschwimmende Tiefbodenseismometeranlage ADS-8 / Soloviyov S.L., Kontar E.A., Dosorov T.A., Kovachev S.A. // Nachrichten der Akademie für Wissenschaften der UdSSR; Erdphysik, 1988, Heft Nr. 9, S. 459 - 460; Ocean Bottom Seismometer (OBS) Systems. Company Profile Project Companies Kieler Umwelt und Meerestechnik GmbH (K.U.M.), Signal-Elektronik und Nets Dienste GmbH (SEND), April 2002, 11 p.). Die Grundlage für diese seismometrischen Bodenanlagen ist ein Unterwassermodul, welches als wasserdichter Körper ausgeführt ist. Der Körper ist mit einer Vorrichtung zur Aufstellung auf dem Meeresgrund versehen. Innerhalb des Körpers ist die Gerätetechnik für die Erfassung von Unterwasserschallsignalen angeordnet. Die Gerätetechnik umfasst entsprechende Filter, Former, Umformer, Datenspeicher, eine Synchronisierschaltung, eine Stromversorgung und eine Einrichtung zur Ermittlung der Ausrichtung des Unterwassermoduls.

Der Hauptmangel dieser ähnlichen Anlagen besteht darin, dass es nicht möglich ist, variable Bodenkenngrößen völlig und adäquat an einen Signalmessgeber zu senden. Die Signalmessgeber sind auf einem Rohrstützrahmen aufgebaut. Der Rohrstützrahmen ist mit kippbaren Metallvorrichtungen zum Anpressen auf dem Boden versehen. Der Mangel in Kombination mit dem Vorhandensein einer Grenze zwischen Boden und Metall verursacht zusätzliche Fehler, wenn akustische Signale gesendet werden. Im Endeffekt verursacht dies die Verzerrung der Messergebnisse. Außerdem ist der Einsatz einer Kipp- und Festhaltevorrichtung nicht effektiv genug. Das liegt an ihrer komplizierten Konstruktion und an einer fehlenden Überwachung ihrer Aufstellung. Deswegen wird eine Baugruppe mit Messwertgebern in den lockeren Grund des Meeresbodens eingesteckt, was zusätzlich eine Störung der Leistungsfähigkeit bedingt.

Es sind seismometrische Bodenanlagen bekannt, deren Konstruktion von dem staatlichem wissenschaftlichem Produktionsbetrieb "SEVMORGEO" vorgeschlagen ist (s. Werbungsbroschüre von SEVMORGEO). Die seismometrischen Bodenanlagen sind nach dem Boje- und dem selbstaufschwimmenden Typ ausgeführt. Die Anlagen beider Typen weisen ein dreiteiliges Geophon in einer Kardanaufhängung und ein Hydrophon auf. Diese Bojenstationen weisen einen guten Übertragungsfaktor in Geophonkanälen dank einem großen Körpergewicht auf. Jedoch sind solchen Stationen Einschränkungen in Bezug auf die Aufstellungstiefe, einem hohen Risiko eines Stationverlusts und ein ziemlich komplizierter Ablauf von Ein- und Ausbau gegeben. Die selbstaufschwimmende Station ist in einem wasserdichten Kugelkörper ausgeführt. Im Kugelkörper werden Geophon, eine Stromversorgung, eine Registriereinrichtung und ein elektronischer Baustein für eine elektrochemische Schallauslösung angeordnet. Der abgedichtete Körper stellt einen positiven Auftrieb (Schwimmfähigkeit) der ganzen Anlage sicher. Um die Anlage auf dem Boden aufzustellen, wird sie auf dem Boden mit elastischen Gummisträngen an eine Betonlast über eine Auslösevorrichtung befestigt. Ein solcher Aufbau der Anlage stellt eine hohe verfahrenstechnische Effektivität von Ein- und Ausbauabläufen sicher und ermöglicht es, in der Tiefe von 6000 Meter zu arbeiten. Jedoch vermindern die zu hohe Anordnung von Verlagerungsgebern zum Boden und eine elastische Befestigung der Station an der Betonlast eine Empfindlichkeit der Station gegenüber Verlagerungswellen.

Die aus der US 5,770,945 A bekannte selbstaufschwimmende elektromagnetische Anlage enthält einen Körper, zwei darin eingebaute gegenseitig orthogonale induktive Magnetfeldsensoren und ein System zur Messung von Horizontalkomponenten eines elektrischen Feldes. Das Messsystem besteht aus waagerechten halbharten Armen ("arms"), die am Anlagenkörper festgemacht sind. Jeder Arm ist fünf Meter lang und mit Elektroden an ihren Enden ausgerüstet.

Der Mangel einer solchen Anlage ist eine unzureichende Messgenauigkeit sowie ein eingeschränkter Anwendungsbereich. Außerdem bedarf ein solcher Aufbau mindestens 100 m² freien Platz auf dem Deck und den Einsatz einer Sonderausrüstung, um Ein- und Ausbauarbeiten ausführen zu können.

Ein weiterer Mangel aller oben beschriebenen Bodenanlagen ist die Möglichkeit, nur eine bestimmte Gruppe von Kenngrößen abzulesen. Dies ist durch Unterschiede in den Betriebsanforderungen von verschiedenen Bodenanlagen bedingt. Es wurden während einer Recherche und Studiums der technischen Fachliteratur keine Stationen gefunden, die neben der Erfassung von seismischen Kenndaten für die Messung von elektromagnetischen bzw. magnetischen Eigenschaften der Gesteine geeignet sind.

Die selbstaufschwimmende Anlage für elektromagnetische Messungen (US 6,842,006 B2) liegt der angemeldeten Lösung ihrem technischen Wesen nach besonders nahe. Diese Anlage enthält einen Körper, eine Schwimmeinheit, ein Datenerfassungssystem, einen Ballastauslöser und einen Ballast. Das Messsystem ist mit Armen zur Messung von Horizontalkomponenten eines elektrischen Feldes ausgerüstet. Die Arme sind fünf Meter lang und weisen einen Durchmesser von fünf Zentimeter mit Elektroden auf. Die Arme bilden zwei normal zueinander angeordneten Dipole auf, welche abwärts in einer Vertikalebene abgesenkt werden können. Das vereinfacht die Ausführung von Versenkungs- und Hebearbeiten, denn in diesem Fall braucht die Anlage nicht, von der Schiffsseite um einen Abstand entfernt zu werden, der die Armlänge überschreitet. Ein bis vier Induktionsgeber sind in der Regel näher zur Armspitze angeordnet, um den Einfluss der magnetischen Masse der Anlage auf die Messergebnisse des Magnetfeldes zu vermindern.

Der Mangel dieser Anlage besteht jedoch darin, dass sie nur zur Messung von Magnetfeldparametern eingesetzt werden kann. Wenn die Anlage über die Schiffsseite hinaus zusammen mit den direkt abwärts ausgerichteten Armen hinausgetragen wird, nimmt die Wahrscheinlichkeit der Beschädigung der Elektroden und der Induktionsgeber in dem Fall zu, wenn der Wasserstrom bei Zuwasserlassen der Anlage damit nicht zurechtkommt, die Arme in die senkrechte Stellung zu bringen. Die Beschädigung ist auch dann möglich, wenn einer oder mehrere Arme unter den Ballast umgeschlagen werden, insbesondere bei Arbeiten in Untiefen.

Es ist Aufgabe der Erfindung, eine solche Konstruktion einer selbstaufschwimmenden Bodenanlage zu entwickeln, welche die Messung von unterschiedlichen Kenndaten der Gesteine des Meeresgrundes ermöglicht und dabei eine erhöhte Prognosegenauigkeit sowie einen bequemeren und zuverlässigeren Betrieb sicherstellt, insbesondere wenn die Anlage in einer Vorstartstellung kleinere räumliche Abmessungen aufweist und es ermöglicht, Senk- und Hebearbeiten zu optimieren.

Die gestellte Aufgabe wird mit den Merkmalen des Anspruchs 1 gelöst.

Das technische Ergebnis ist mittels der Entwicklung von einem Modulaufbau der Bodenanlage erreicht. Dabei ist das Hauptmodul zur Messung von elektromagnetischen Kenndaten der Meeresgrundgesteine mit zusätzlichen Modulen kombiniert. Die zusätzlichen Module enthalten die Gerätetechnik zur Messung von anderen Parametern der Gesteine.

Die Modulbodenanlage ist **dadurch gekennzeichnet, dass** zwischen einem Hauptmodul zur Messung von elektromagnetischen Kenndaten der Meeresgrundgesteine und einem Ballast mindestens ein Modul angeordnet ist, welches für die Messung von anderen Eigenschaften und Kenndaten der Meeresgrundgesteine geeignet ist. Dabei sind alle Systeme zur Datenerfassung und Stromversorgung im Hauptmodul eingebaut und mit den anderen Modulen über abgedichtete Steckverbinder verbunden. Die abgedichteten Steckverbinder sind in einem Modulkörper eingebaut. Die Module selbst sind am Ballast mit Kevlarschoten befestigt. Die Kevlarschoten sind mit einem elektrochemischen Auslöser versehen.

Als zusätzliche Module enthält die Bodenanlage Module für Messungen von magnetischen und seismischen Eigenschaften.

Um die Senk- und Hebearbeiten bequemer ausführen zu können, sind die Arme am unteren Teil des Anlagekörpers befestigt. In der Ausgangsstellung sind die Arme nach oben unter einem Winkel von mindestens 15 Grad zur Senkrechten ausgerichtet und mittels Halterungen verriegelt. Die Halterungen sind mit einem Auslöseelement für die Senk- und Hebevorrichtung (Ankerkran, Kran oder Handhabevorrichtung), z. B. mit einem "painter hook", ausgerüstet. Um den Transport zu vereinfachen, sind die Arme teleskopisch ausgeführt.

In einer Ausführungsform der Bodenanlage kann das Hauptmodul selbständig eingesetzt werden. In diesem Fall ist zwischen dem Modul und dem Ballast ein starres kegelförmiges Element ein sogenannter Topf aufgestellt. Dieses kegelförmige Element ist aus einem nicht leitenden Werkstoff, z. B. Polyäthylen, Polyurethan und ähnlichen Materialien gefertigt, um den Körper des Hauptmoduls in der Horizontalebene zu befestigen und ein Anhaften des Körpers des Hauptmoduls am Boden zu vermeiden.

Dabei kann das Hauptmodul zusätzlich mit einem Modul für magnetische Messungen ergänzt sein, welches auf einer halbharten Stange angebaut ist. Das ermöglicht es, den Einfluss der magnetischen Massen des Hauptmoduls auf die Messergebnisse des magnetischen Feldes zu verringern, z. B. wenn mit sich einstellenden elektromagnetischen Feldern (nachfolgend zweigliedrige Ausführungsform) gearbeitet wird. Da der Mittelabstand des Hauptmoduls von den Magnetgebern in dieser Ausführungsform 0,5 - 0,8 Meter beträgt, so nimmt der Einfluss der magnetischen Massen mit dem Abstand in dritter Potenz ab. Die vorgeschlagene Konstruktion der Anlage stellt eine Verminderung des Einflusses der magnetischen Massen um das 2,5- bis 3-fache bereits bei einer Stangen länge von 5 Meter sicher.

Die Erfindung wird anhand von in den Zeichnungen dargestellten Ausführungsbeispielen näher erläutert. Es zeigen:
- Fig. 1 a: eine Gesamtansicht des Hauptmoduls in Vorderansicht,
- Fig. 1b: eine Seitenansicht des Moduls,
- Fig. 2: eine Bodenanlage mit einem Hauptmodul und einem Modul für mag- netische Messungen (eine solche Bodenanlage wird bei den For- schungen von magnetotellurischen Feldern eingesetzt, wenn ortho- gonale magnetische und elektromagnetische Komponenten gleichzei- tig gemessen werden),
- Fig. 3: eine Bodenanlage mit einem Hauptmodul, einem Modul für magneti- sche Messungen und einem Modul für seismische Erkundung. (Eine Bodenanlage dieser Art wird eingesetzt, wenn elektromagnetische und seismische Felder gleichzeitig gemessen werden müssen, z. B. während der Arbeiten im Landesnetz von Stützprofilen) und
- Fig. 4: das Schema einer zweigliedrigen Ausführungsform der Anlage mit ei- nem Außenmodul für die magnetischen Messungen.

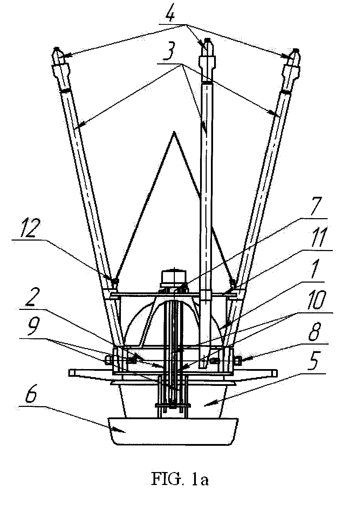

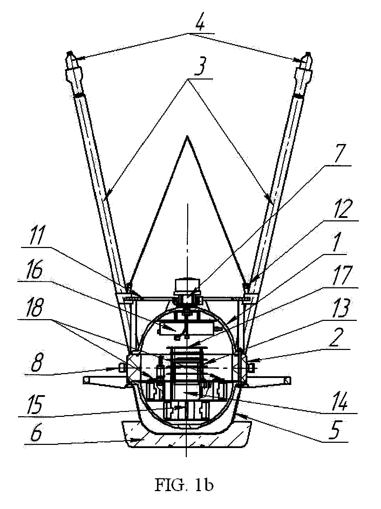

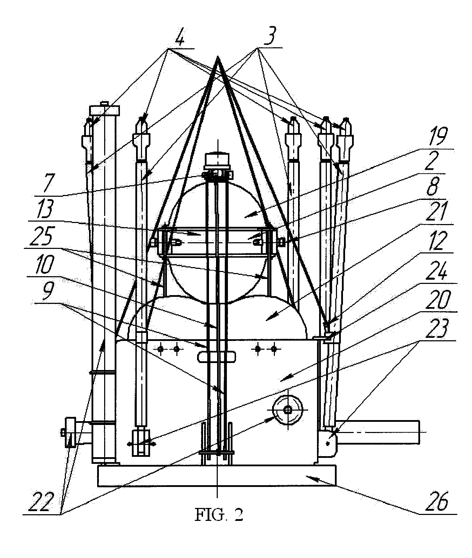

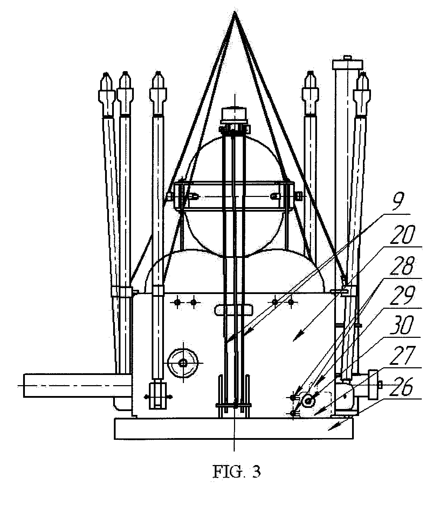

In den Fig. 1 bis 4 sind folgende zusätzliche Bezugsziffern benutzt:
- 1 -: ein kugelförmiger wasserdichter Körper aus einer Aluminium- Magnesiumlegierung,
- 2 -: ein Einsatzstück,
- 3 -: Arme,
- 4 -: unpolarisierbare Elektroden,
- 5 -: ein starres kegelförmiges Element,
- 6 -: ein Ballast,
- 7 -: ein elektrochemischer Schallauslöser,
- 8 -: abgedichtete Steckverbinder,
- 9 -: Kevlarschoten,
- 10 -: ein elastischer Zuggurt,
- 11 -: eine Abdeckung,
- 12 -: eine Verriegelung für die Arme,
- 13 -: eine Registriereinrichtung,
- 14 -: eine Hauptstromversorgungseinheit,
- 15 -: eine Stromversorgung der Auslösevorrichtung,
- 16 -: ein elektronischer Baustein der Auslösevorrichtung,
- 17 -: ein Winkelgeber,
- 18 -: ein Verstärker für elektrische Kanäle (Fig. 1a - 1b),
- 19 -: ein Hauptmodul,
- 20 -: ein Körper des Moduls für magnetische Messungen,
- 21 -: eine Schwimmeinheit,
- 22 -: ein Induktionsgeber des magnetischen Feldes,
- 23 -: Baugruppen zur Befestigung der beweglichen Arme,
- 24 -: Begrenzer,
- 25 -: Stifte,
- 26 -: ein Ballast, (Fig. 2)
- 27 -: ein Körper des Moduls für seismische Erkundung,
- 28 -: eine Befestigung,
- 29 -: ein Hydrophon,
- 30 -: abgedichtete Steckverbinder (Fig. 3),

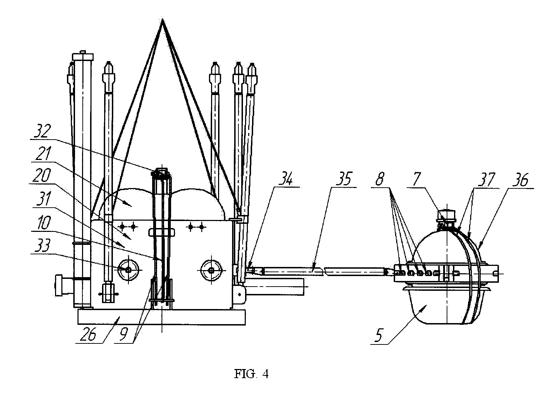

- 31 -: ein Modul für magnetische Messungen,
- 32 -: eine passive Auslösevorrichtung,
- 33 -: ein Gehäuse des Winkelgebers,
- 34 -: eine Kardanaufhängung,
- 35 -: eine halbharte Stange,
- 36 -: ein Hauptmodul,
- 37 -: elastische Zuggurte (Fig. 4).

Wie die Fig. 1a und 1b zeigen besteht ein Körper 1 aus zwei Halbkugeln aus Aluminium-Magnesiumlegierung und einem Einsatzstück 2 aus hochfestem Polyurethan oder einem anderen ähnlichen Material. Innerhalb des Körpers 1 des Hauptmoduls befinden sich:
- eine Registriereinrichtung 13; ihre Konstruktion ermöglicht es, eine bis drei Vierkanalbaugruppen mit einem Speicher auf den Flash-Karten einzubauen;
- eine Hauptstromversorgung 14,
- eine Stromversorgung einer Auslösevorrichtung 15,
- ein elektronischer Baustein einer Auslösevorrichtung 16,
- ein dreiteiliger Winkelgeber 17 und
- ein Vorverstärker für elektrische Kanäle 18.

Das Einsatzstück 2 dient dazu, dem Modul eine zusätzliche positive Schwimmfähigkeit zu verleihen, die Arme 3 zu befestigen und abgedichtete Steckverbinder 8 zu verbauen.

Die Arme 3 weisen einen teleskopischen Aufbau auf und sind aus einem nicht leitenden Werkstoff, z. B. Glasfaser- bzw. Carbonfaserkunststoff gefertigt. Innerhalb der Arme ist das Kabel mit abgedichteten Steckverbindern (in der Zeichnung nicht abgebildet) verlegt. Die Steckverbinder dienen zum Anschluss der unpolarisierbaren Messelektroden 4 sowie zum Anschluss an den entsprechenden abgedichteten Steckverbindern im Einsatzstück 2. Die Arme zur Messung von Horizontalkomponenten des elektrischen Feldes sind an den Ecken des Einsatzstücks 2 befestigt. Sie können frei um die waagerechte Achse rotieren. Der Arm zur Messung der senkrechten Komponente des elektrischen Feldes ist starr an der Seitenfläche des Einsatzstücks 2 befestigt. Die Länge der Arme im aufgeklappten Zustand beträgt mindestens 5 Meter.

Wenn das Modul autonom eingesetzt wird, ist der Körper 1 des Hauptmoduls über ein starres kegelförmiges Element 5 auf dem Betonballast 6 aufgestellt. Das starre kegelförmige Element 5 ist aus einem nicht leitenden Werkstoff, z. B. Polyäthylen oder Polyurethan gefertigt. Das starre kegelförmige Element 5 dient zur Sicherung des Körpers des Hauptmoduls in der Horizontalebene und zur Vermeidung des Anhaftens des Körpers des Hauptmoduls am Grund, wenn das Modul auf dem Meeresboden aufgestellt wird.

Das Hauptmodul ist unbeweglich an das starre kegelförmige Element 5 und den Ballast 6 über eine Auslösevorrichtung 7 befestigt. Die Auslösevorrichtung 7 ist auf der oberen Halbkugel aufgebaut. Dafür sind nichtdehnbare Schoten 9 z. B. aus Kevlar verwendet. Um die primäre Spannung in der Auslöserichtung herzustellen, sind zwischen der Kevlarschote und dem Ballast der elastische z. B. Gummi-Zuggurt 10 angeordnet.

Die obere Abdeckung 11 dient zur Vorbeugung der Beschädigung der akustischen Antenne der Auslösevorrichtung, zur Bildung eines Anfangswinkels beim Aufklappen der beweglichen Arme (mindestens 15 Grad von der senkrechten Achse) und zu ihrer Verriegelung in dieser Stellung vor dem Versenken.

Die Verriegelungen 12 sind keilförmig oder kegelförmig ausgeführt und dienen für die Sicherung der Arme 3 auf der Abdeckung 11. Die Verriegelungen 12 sind mittels Schoten mit dem Auslöseelement der Senk- und Hebevorrichtung (Ankerkran, Kran oder Handhabevorrichtung), z.B. "painter hook" verbunden. Die Schotenlänge der Verriegelungen 12 ist so gewählt, dass die Lösung der Verriegelungen unter der Wirkung des Gewichts der Anlage im Wasser und zwar nach der Auslösung des Auslöseelements bei der Senk- und Hebevorrichtung erfolgt. Dabei bleiben die Verriegelungen 12 zusammen mit den Schoten auf der Senk- und Hebevorrichtung - das ist für die nachfolgenden Aufstellungen der Anlagen erforderlich.

Wenn mehrere Kenndaten gemessen werden müssen, ist eine solche Ausführungsform dieser Erfindung benutzt, wobei zwischen dem Hauptmodul und dem Ballast mindestens ein zusätzliches Modul für magnetische oder seismische Messungen angeordnet ist.

Das Hauptmodul 19 mit einer zusätzlichen Vierkanalbaugruppe der Registriereinrichtung 13 wird anhand der Stifte 25 an der Schwimmeinheit unbeweglich befestigt. Die Stifte 25 sind aus einem unmagnetischen Werkstoff z. B. Messing gefertigt. Die Schwimmeinheit 21 kann aus genormten Glaskugeln oder aus einem syntaktiken Schaumstoff gefertigt sein. Sie ist an den Körper 20 des Moduls für magnetische Messungen in seinem oberen Teil befestigt. Der Körper des Moduls 20 ist aus nicht leitendem Werkstoff, z. B. Polyäthylen oder Polypropylen gefertigt. Im unteren Teil des Körpers 20 sind Induktionsgeber 22 zur Messung von Horizontalkomponenten des magnetischen Feldes und Baugruppen 23 für die Befestigung der beweglichen Arme 3 zur Messung von Horizontalkomponenten des elektrischen Feldes angeordnet.

Die Befestigungsbaugruppen 23 stellen eine freie Bewegung der Arme 3 in der senkrechten Ebene sicher und sind so angeordnet, dass die Arme im aufgeklappten Zustand parallel zum entsprechenden Induktionsgeber 22 liegen.

Die beweglichen Arme 3 sind am Begrenzer (Anschlag) 24 unter einem Anfangsöffnungswinkel mittels der Verriegelungen 12 festgemacht. Der Induktionsgeber 22 und der Arm 3 zur Messung von senkrechten Komponenten des magnetischen und des elektrischen Feldes sind dementsprechend in der senkrechten Stellung zum Körper 20 an gegenüberliegenden Seiten starr befestigt.

Die Elektroden 4 der Arme 3 und der Induktionsgeber 22 sind an die Registriereinrichtung 13 mittels abgedichteter Steckverbinder 8 angeschlossen, die im Einsatzstück 2 angeordnet sind. Die Anbindung der Anlage an den Ballast 26 ist über eine Auslösevorrichtung 7 anhand der oben beschriebenen Kevlarschoten 9 und Zuggurte 10 ausgeführt.

Der Körper 27 ist zylinderförmig oder halbkugel-zylinderförmig aus einem unmagnetischen Material z.B. aus einer Aluminium-Magnesiumlegierung ausgebildet. Im oberen Teil des Körpers 27 ist ein Hydrophon 29 und an der Seitenfläche des Zylinders der abgedichtete Steckverbinder 30 angeordnet. Der Körper 27 ist innen an die Seitenfläche des Körpers 20 des Moduls für magnetische Messungen so befestigt, so dass die untere Fläche des Körpers 27 bündig mit der unteren Kante des Körpers 20 liegt. Der abgedichtete Steckverbinder 30 ragt durch die technische Öffnung des Körpers 20 heraus, um bequem an den Hauptmodul angeschlossen werden zu können. In dieser Ausführungsform ist in die Registriereinrichtung 13 des Hauptmoduls noch eine Vierkanalbaugruppe eingebaut. Innerhalb des Körpers 27 ist das dreiteilige Geophon (in der Zeichnung nicht abgebildet) eingebaut, welches mit dem Körperboden 27 fest verbunden ist.

Da der Körper 20 des Moduls für magnetische Messungen starr auf dem Ballast 26 mittels undehnbarer Kevlarschoten 9 befestigt ist, sind der Körper 27 des Moduls für seismische Erkundung und die auf seinem Boden aufgebauten Geophone mit dem massiven Ballast 26 fest verbunden. Das erhöht wesentlich die Empfindlichkeit des Systems gegenüber den Verlagerungswellen. Der Verzicht auf die Kardanaufhängung im Geophonsystem wirkt sich auch positiv auf die Empfangsqualität der Transversalwelle aus, weil das Hauptmodul einen dreiteiligen Winkelgeber 17 enthält.

Die zweigliedrige Ausführungsform der Bodenanlage ermöglicht es, den Einfluss der magnetischen Massen des Hauptmoduls auf die Messergebnisse des magnetischen Feldes, z. B. während der Arbeiten mit den sich einstellenden elektromagnetischen Feldern, zu mindern.

Im Rahmen dieser Ausführungsform wird das Modul für magnetische Messungen 31 (mit oder ohne Modul für seismische Messungen) an dem Ballast 26 mittels der Schoten 9 mit den Zuggurten 10 über die passive Auslösevorrichtung 32 befestigt. Die Auslösevorrichtung 32 ist auf der Schwimmeinheit 21 aufgebaut. Das wasserdichte Gehäuse des Winkelgebers 33 mit dem dreiteiligen Winkelgeber ist im Körper 20 des Moduls für magnetische Messungen eingebaut. Das Modul für magnetische Messungen 31 ist mit dem Hauptmodul 36 mittels der halbharten Stange 35 verbunden. Die halbharte Stange 35 ist aus einem nicht leitenden Werkstoff, z. B. Polyäthylen, ausgeführt. Die halbharte Stange 35 kann für Transportzwecke auseinander genommen werden und ist als Hohlkörper (z. B. als Rohr) ausgeführt. Die Länge der Stange 35 im zusammengebauten Zustand beträgt mindestens 5 Meter. Die Stange 35 ist mit dem Körper 20 über eine Kardanaufhängung 34 verbunden. Die Kardanaufhängung 34 ist aus einem nicht leitenden Werkstoff, z. B. Polyurethan, gefertigt. Die Kardanaufhängung 34 stellt die freie Bewegung der Stange 35 im Bereich von 180 Grad in der Horizontalebene und 160 Grad in der senkrechten Ebene sicher. Die Stange 35 ist mit dem Hauptmodul an der Befestigungsstelle eines der beweglichen Arme gekoppelt. Innerhalb der halbharten Stange 35 wird das mehradrige Verbindungskabel (in der Zeichnung nicht abgebildet) angeordnet. Das Verbindungskabel hat Abzweigungen an seinen Enden, um den Anschluss an die abgedichteten Steckverbinder der Geber und der Baugruppen des Moduls 31 sowie an die abgedichteten Steckverbinder 8 des Hauptmoduls auszuführen. Das Hauptmodul 36 ist im starren kegelförmigen Element 5 ("Topf") angeordnet und daran mittels der elastischen Zuggurte 37 über einen Schallauslöser 7 befestigt. Das starre kegelförmige Element 5 ist beschwert, um dem Hauptmodul negative Schwimmfähigkeit von 1-2 kg zu verleihen. Die passive Auslösevorrichtung 32 löst sich nach dem Signal von der Schallauslösevorrichtung 7 aus. Dieses Signal ist über das Verbindungskabel übertragbar.

Die Bodenanlage funktioniert folgenderweise.

Vor dem Versenken wird das vorgegebene Modulsortiment gewählt. Die Bodenanlage ist zusammengebaut, indem die Kontakte der Geber von zusätzlichen Modulen und die Elektroden der Arme am die Registriereinrichtung 13 des Hauptmoduls über die abgedichteten Steckverbinder 8 auf dem Einsatzstück 2 angeschlossen sind.

Die Arme sind ausgefahren und am Begrenzer 24 unter dem Anfangsöffnungswinkel mittels der Verriegelungen 12 befestigt. Der Induktionsgeber 22 und der Arm 3 für Messungen der senkrechten Komponenten des magnetischen und des elektrischen Feldes sind jeweils senkrecht am Körper 20 an gegenüberliegenden Seiten unbeweglich befestigt. Ggf. ist das Modul 31 für magnetische Messungen installiert, indem es mit dem Hauptmodul 36 mittels halbharter Stange 35 verbunden ist. Die Befestigung der Anlage an den Ballast 26 erfolgt über eine Auslösevorrichtung 7 mittels der Kevlarschoten 9 und der Zuggurte 10.

Die Bodenanlage ist mittels der Senk- und Hebevorrichtung von der Bordseite ins Wasser gesenkt. Die "painter hook" sind aufgemacht. Das Eintauchen der Anlage fängt unter der Wirkung der Schwerkraft an. Die Verriegelungen 12 sind entriegelt. Dabei sind die Arme beim Eintauchen in der quasi-senkrechten Lage durch die Wirkung des Wasserstroms festgehalten.

Nachdem der Boden erreicht ist, klappen sich die Arme unter der Wirkung der Schwerkraft auf und nehmen die waagerechte Stellung ein.

Nach dem Empfang des Signals vom Schiff fängt die Anlage an, im vorgegebenen Betrieb zu arbeiten. Nach Abschluss der Arbeiten ist ein Signal an den Schallauslöser 7 sendbar, die Schoten 9, die den Ballast 6 (und das starre kegelförmige Element 5, falls vorhanden) und die Module der Anlage verbinden, sind lösbar, und die Anlage taucht auf.

Die vorgeschlagene Modulbauweise der Anlage ermöglicht es, bei nur einem Eintauchvorgang verschiedene Kenndaten und Eigenschaften der Meeresgrundgesteine zu erfassen. Dabei ermöglichen die Besonderheiten der Aufstellung des Moduls für magnetische Messungen und des Moduls für seismische Erkundung auf der Bodenanlage es, die Empfindlichkeit ihrer Geber sicherzustellen, die die ähnlichen Kenngrößen der Anlagen mit typgleichen Messgeräten überschreiten. Die vorgeschlagene Anlage ist viel kompakter und bedienungsfreundlich.

## Patentansprüche

1. Bodenanlage auf der Grundlage eines Moduls zur Messung von elektromagnetischen Kenndaten der Meeresgrundgesteine mit einem Körper (1), einer Schwimmeinheit, einem Datenerfassungssystem einschließlich von Elektroden (4, 5), einem Ballastauslöser (7) und einem Ballast (6),
**dadurch gekennzeichnet,**
**dass** zwischen dem Modul (19) zur Messung von elektromagnetischen Kenndaten der Meeresgrundgesteine und dem Ballast (6) mindestens ein Modul (31) angeordnet ist, welches für die Messung von anderen Eigenschaften und Kenndaten der Meeresgrundgesteine geeignet ist,
**dass** dabei alle Erfassungs- und Versorgungssysteme in einem ersten Modul (19) angeordnet und mit anderen Modulen (31) über abgedichtete Steckverbinder (8) verbunden sind, die im Körper (1) dieses Moduls (31) eingebaut sind und
**dass** die Module (19, 31) selbst auf dem Ballast (6) mittels der mit elektrochemischen Auslösern (7) ausgerüsteten Kevlarschoten (9) befestigt sind.

2. Bodenanlage nach Anspruch 1,
**dadurch gekennzeichnet,**
**dass** sie als zusätzliches Modul ein Modul (31) für magnetische Messungen enthält.

3. Bodenanlage nach Anspruch 1,
**dadurch gekennzeichnet,**
**dass** sie als zusätzliches Modul ein Modul für seismische Messungen enthält.

4. Bodenanlage nach Anspruch 1,
**dadurch gekennzeichnet,**
**dass** die Arme (3) im unteren Teil des Anlagekörpers (1) befestigt sind,
**dass** die Arme (3) in der Ausgangsstellung nach oben unter einem Winkel von mindestens 15 Grad von der Senkrechten ausgerichtet und mittels Verriegelungen befestigt sind und
**dass** die Verriegelungen (12) mit dem Auslöseelement (7) der Senk- und Hebevorrichtung verbunden sind.

5. Bodenanlage nach Anspruch 1,
**dadurch gekennzeichnet,**
**dass** die Arme (3) teleskopisch ausgeführt sind.

6. Bodenanlage zur Messung von elektromagnetischen Kenndaten der Meeresgrundgesteine mit einem Körper (1), einer Schwimmeinheit (21), einem Datenerfassungssystem einschließlich der Arme (3) mit Elektroden (4, 5), einem Ballastauslöser (7) und dem Ballast (6),
**dadurch gekennzeichnet,**
**dass** zwischen dem Körper (1) und dem Ballast (6) zusätzlich ein starres kegelförmiges Element (5) angeordnet ist,
**dass** das starre kegelförmige Element (5) aus nicht leitendem Werkstoff z. B. Polyäthylen, Polyurethan und ähnlichen Materialien, gefertigt ist,
**dass** die Arme (3) mit Elektroden (4, 5) im unteren Teil des Körpers (1) befestigt sind,
**dass** die Arme (3) in der Ausgangsstellung unter einem Winkel von mindestens 15 Grad von der Senkrechten nach oben ausgerichtet und mittels Verriegelungen (12) befestigt sind und
**dass** die Verriegelungen (12) mit dem Auslöseelement (16) der Senk- und Hebevorrichtung verbunden sind.

7. Bodenanlage nach Anspruch 6,
**dadurch gekennzeichnet,**
**dass** die Arme (3) mit Elektroden (4, 5) teleskopisch ausgeführt sind.

8. Bodenanlage nach Anspruch 6,
**dadurch gekennzeichnet,**
**dass** sie zusätzlich mit einem Modul (31) für magnetische Messungen ergänzt ist, welches mit dem Körper (20) mittels einer halbharten Stange (35) verbunden ist.
